# EUROPÄISCHE PATENTSCHRIFT

(11) **EP 2 146 880 B1**
(45) Veröffentlichungstag und Bekanntmachung des Hinweises auf die Patenterteilung: **01.07.2015**
(21) Anmeldenummer: 08709251.6
(22) Anmeldetag: 28.02.2008
(51) Int. Cl.: B60T 8/17, B60T 8/1755, B60T 8/1766, B60T 8/26

(54) **VERFAHREN UND VORRICHTUNG ZUR STABILISIERUNG EINES EINSPURIGEN KRAFTFAHRZEUGS**
METHOD AND DEVICE FOR STABILIZING A SINGLE-TRACK MOTOR VEHICLE
PROCÉDÉ ET DISPOSITIF POUR LA STABILISATION D'UN VÉHICULE À MOTEUR À DEUX ROUES

(30) Priorität: 16.03.2007 DE 102007013365; 28.02.2008 DE 102008011577
(43) Veröffentlichungstag der Anmeldung: 27.01.2010
(73) Patentinhaber: Continental Teves AG & Co. OHG, 60488 Frankfurt (DE)
(72) Erfinder: KREMER, Michael, 64846 Gross-Zimmern (DE); IHRIG, Hans Georg, 64289 Darmstadt (DE)
(86) Internationale Anmeldenummer: PCT/EP2008/052434
(87) Internationale Veröffentlichungsnummer: WO 2008/113666

(56) Entgegenhaltungen:
- EP-A- 0 603 612
- WO-A-2004/041613
- DE-A1- 10 034 222
- DE-A1- 10 232 362
- DE-A1- 10 235 378
- DE-A1-102005 054 557

## Beschreibung

Die Erfindung betrifft ein Verfahren gemäß Oberbegriff von Anspruch 1 sowie eine Vorrichtung gemäß Oberbegriff von Anspruch 14.

Das Kraftrad hat sich im Laufe der letzten Jahrzehnte von einem kostengünstigen Fortbewegungsmittel zu einem Freizeitgefährt entwickelt, bei welchem vermehrt sowohl die Sicherheit als auch der Komfort des Fahrers in den Vordergrund gerückt wird.

Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt.

Im Zusammenhang mit Motorrädern versteht man unter einer "Integralbremsanlage" eine Bremsanlage, bei der bei Betätigung des Handbremshebels bzw. des Fußbremshebels zusätzlich die Bremse des zweiten Bremskreises eingebremst wird. Durch Betätigen eines einzigen Betätigungselements können also beide Bremsen angesteuert werden. Integralbremsanlagen für Krafträder sind beispielsweise aus der DE 38 03 563 A1 und DE 103 16 351 A1 bekannt.

Aufgrund der erhöhten Sicherheit und/oder des gesteigerten Komforts ist es zu erwarten, dass es in Zukunft in immer stärkerem Maße zum Einsatz von Integralbremsen bei Motorrädern kommen wird, welche durch aktiven Druckaufbau am Vorder- und/oder Hinterrad den Fahrer beim Bremsvorgang unterstützen und damit für einen optimierten Bremsweg sorgen. Aus der DE 10 2005 003 255 A1 ist ein Bremssystem für Motorräder bekannt, welches bei einem konstruktiv einfachen Aufbau die Funktionalität von ABS und Integralbremse gewährleistet.

Ein Verfahren zur Stabilisierung eines einspurigen Kraftfahrzeugs während einer vorliegenden Kurvenbremsung wird in der DE 102 32 362 A1 beschrieben. Zur Erkennung, ob ein stabiler Fahrzustand in der Kurve vorliegt oder nicht, wird eine gemessene Querbeschleunigung ausgewertet.

Ein Verfahren sowie eine Vorrichtung gemäß dem Oberbegriff der unabhängigen Ansprüche 1 und 14 ist aus der DE 102 35 378 A1 bekannt.

Bei einer Geradeausbremsung können bei einem Motorrad aus verschiedenen Gründen instabile Fahrzustände entstehen, welche nicht von einem Anti-Blockiersystem erkannt und entsprechend ausgeregelt werden können. Einige Beispiele seien im Folgenden exemplarisch genannt. Zum einen wird bei einer starken Bremsung das Hinterrad entlastet. Je weniger Bodenkontakt das Hinterrad hat, desto weniger Seitenführungskräfte kann es übertragen. Das Motorrad ist nun relativ empfindlich gegenüber Störeinflüssen. Durch z.B. Seitenwind oder Fahrbahnunebenheiten kann das Motorradheck seitlich ausbrechen oder das Fahrzeug zu einem Pendeln angeregt werden. Außerdem kann auch ein, wenn auch nur kurzzeitig, überbremstes Hinterrad zum Gieren des Motorrades führen.

Der Erfindung liegt daher die Aufgabe zugrunde, ein Verfahren sowie eine Vorrichtung vorzuschlagen, mit welchem/ welcher bei einem einspurigen Kraftfahrzeug instabile Fahrzustände frühzeitig erkannt und beseitigt werden.

Diese Aufgabe wird erfindungsgemäß durch das Verfahren gemäß Anspruch 1 sowie die Vorrichtung gemäß Anspruch 14 gelöst.

Unter dem Begriff "Pendeln" wird erfindungsgemäß in Verallgemeinerung ein Schwingen oder eine Eigenschwingung des Motorrades um eine Vertikalachse verstanden. Darunter fällt z.B. ein Pendeln um die Lenkachse, welches bei Bremsungen auftreten kann.

Der Erfindung liegt der Gedanke zugrunde, durch Auswertung der Gierrate und/oder des Schwimmwinkels des Fahrzeugs einen instabilen Fahrzustand, der während einer vorgegebenen Fahrsituation einer Geradeausbremsung oder annährenden Geradeausbremsung auftritt, zu erkennen, und diesen durch Reduzierung des Bremsdruckes an einer Radbremse zu beseitigen/stabilisieren oder zumindest teilweise zu stabilisieren.

Bevorzugt wird genau eine Fahrsituation vorgegeben, es können aber auch zwei oder mehr Fahrsituationen vorgegeben werden. Die Fahrsituation(en) wird/werden anhand von Fahrdynamikgrößen und/oder Größen von Fahrzeugsystemen erkannt.

Bei der vorgegebenen Fahrsituation handelt es sich zweckmäßigerweise um eine Bremsung, da bei Bremsungen die Gefahr eines Hinterradabhebens oder einer Überbremsung des Hinterrades besteht, was zu einem Gieren des Fahrzeuges führen kann. Besonders bevorzugt wird ein Bremsdruck in einer Radbremse zur Erkennung der vorgegebenen Fahrsituation(en) betrachtet, um so eine Fahrsituation einer Bremsung zu erkennen.

Es handelt sich bei der vorgegebenen Fahrsituation um eine Geradeausbremsung oder annährende Geradeausbremsung, da in dieser Fahrsituation, z.B. aufgrund der verstärkten Entlastung des Hinterrades, oftmals instabile Fahrzustände auftreten und eine Stabilisierung dieser instabilen Fahrzustände somit stark zur Verbesserung der Fahrsicherheit beträgt.

Da üblicherweise bei einer Bremsung eines Motorrades der größte Anteil der Bremskraft über das Vorderrad übertragen wird, wird, um eine möglichst schnelle Stabilisierung des Fahrzustandes zu erreichen, der Bremsdruck bevorzugt am Vorderrad reduziert.

Durch die Reduktion des Bremsmomentes am Vorderrad erlangt üblicherweise das Hinterrad wieder stärkeren Bodenkontakt, so dass dieses wieder mehr Bremskraft übertragen kann. Daher wird gemäß einer bevorzugten Ausführungsform des erfindungsgemäßen Verfahrens zusammen mit oder nach der Reduktion des Bremsmoments an dem Vorderrad das Bremsmoment an dem Hinterrad erhöht.

Die Erkennung des instabilen Fahrzustandes geschieht über die Betrachtung der Gierrate und/oder des Schwimmwinkels. Handelt es sich bei dem instabilen Fahrzustand um ein Pendeln des Motorrades, so wird dieser instabile Fahrzustand bevorzugt daran erkannt, dass das Signal der Gierrate und/oder das Signal des Schwimmwinkels über eine vorgegebene Zeitdauer einen periodischen oder annährend periodischen zeitlichen Verlauf zeigt, da dies die Pendelbewegung (Schwingung) des Motorrades um die Lenkachse direkt wiedergibt.

Alternativ oder zusätzlich wird eine Pendelbewegung des Motorrades bevorzugt daran erkannt, dass das Signal der Gierrate und/oder das Signal des Schwimmwinkels eine vorgegebene Anzahl von Nulldurchgängen oder Durchgängen durch den Mittelwert durchläuft. Hierdurch kann ein Pendeln auch erkannt werden, wenn das Signal der Gierrate und/oder das Signal des Schwimmwinkels einen wenig periodischen, d.h. bezüglich Frequenz und/oder Amplitude unregelmäßigen, zeitlichen Verlauf zeigt.

Handelt es sich bei dem instabilen Zustand weniger um ein Pendeln sondern eher um ein Ausbrechen des Hecks, so wird der instabile Zustand bevorzugt daran erkannt, dass der Wert des Schwimmwinkels einen vorgegebenen Schwellenwert übersteigt. Diese Erkennungsmöglichkeit wird besonders bevorzugt dadurch abgesichert, dass zusätzlich die Gierrate betrachtet wird. Zeigt die Gierrate einen konstanten oder annährend konstanten zeitlichen Verlauf, dem entspricht ein konstanter oder annährend konstanter Wert, so handelt es sich um eine nicht schwingende Schwimmwinkeländerung.

Wenn der Wert des Schwimmwinkels einen vorgegebenen Schwellenwert übersteigt, kann dies aber auch von einer Schwingung mit großer Amplitude herrühren, sodass auch in diesem Fall ein instabiler Zustand vorliegt, der erkannt und durch Reduzierung des Bremsdruckes an der Vorderradbremse stabilisiert wird.

Bevorzugt wird auch ein instabiler Zustand erkannt, wenn die zeitliche Änderung der Gierrate einen vorgegebenen Schwellenwert übersteigt, da es sich dann um ein schnelles Ausbrechen des Hecks handelt.

Gemäß einer bevorzugten Ausführungsform des erfindungsgemäßen Verfahrens wird die Größe (Stärke) und/oder der zeitliche Verlauf der Bremsmomentreduktion an dem Rad in Abhängigkeit von der Gierrate und/oder dem Schwimmwinkel durchgeführt. Dadurch ist eine situationsspezifische Bremsmomentverringerung möglich, die es erlaubt, die Fahrstabilität möglichst schnell wiederherzustellen ohne jedoch zu einer Überkompensation, z.B. einer Unterbremsung durch zu starke Bremsmomentreduktion, zu führen.

Bevorzugt wird die Frequenz des Signals der Gierrate und/oder des Schwimmwinkels, und/oder die Amplitude des Signals der Gierrate und/oder des Schwimmwinkels zur Dimensionierung der Bremsdruckreduktion herangezogen, um die Stärke der Instabilität des Zustandes zu beurteilen und eine situationsspezifische Stabilisierung durchzuführen. So wird die Bremsdruckverringerung besonders bevorzugt derart durchgeführt, dass bei einem Pendeln des Motorrades mit einer Frequenz und/oder einer Amplitude, die größer als ein entsprechender vorgegebener Schwellenwert ist, eine Bremsdruckabbau durchgeführt wird, der geringer ist als der Bremsdruckabbau bei einem Pendeln des Motorrades mit einer Frequenz und/oder einer Amplitude, die kleiner als der entsprechende vorgegebene Schwellenwert oder ein entsprechender vorgegebener zweiter Schwellenwert ist.

Ebenso ist es bevorzugt, alternativ oder zusätzlich das Bremsmoment in Abhängigkeit von dem Maß der zeitlichen Änderung der Gierrate und/oder des Schwimmwinkels und/oder von dem Wert der Gierrate und/oder des Schwimmwinkels durchzuführen, um so eine situationsabhängige Stabilisierung durchzuführen.

Gemäß einer anderen bevorzugten Ausführungsform des erfindungsgemäßen Verfahrens wird die Wirkung der Bremsmomentreduktion auf die Gierrate und/oder den Schwimmwinkel ausgewertet. Gierrate und/oder Schwimmwinkel werden dann herangezogen, um zu entscheiden, ob und/oder zu welchem Zeitpunkt eine nachfolgende Bremsmomenterhöhung an dem Rad durchgeführt wird. Alternativ oder zusätzlich werden Gierrate und/oder Schwimmwinkel herangezogen, um eine nachfolgende Bremsmomenterhöhung an dem Rad zu dimensionieren (Größe des Bremsdruckaufbaus). Durch diese Maßnahmen wird vermieden, dass sich ein erneuter instabiler Fahrzustand einstellt.

Der Fahrzustand einer Bremsung wird bevorzugt anhand des Wertes und/oder des zeitlichen Verlaufes einer Fahrzeugverzögerung, und/oder des Wertes und/oder des zeitlichen Verlaufes einer Radverzögerung, und/oder des Wertes und/oder des zeitlichen Verlaufes mindestens eines Bremsdruckes erkannt. Diese Größen liegen in einem elektronischen Bremssystem in der Regel bereits vor, sodass hierfür keine zusätzlichen Sensoren und/oder Auswerteverfahren notwendig sind. Dies reduziert die Umsetzungskosten der Erfindung.

Ein Geradeausfahrt oder annährende Geradeausfahrt wird bevorzugt durch Betrachtung des Wertes und/oder des zeitlichen Verlaufes eines Rollwinkels des Fahrzeugs erkannt, da dies eine sichere und zuverlässige Erkennung der Geradeausfahrt ermöglicht. Entsprechend umfasst die erfindungsgemäße Vorrichtung gemäß einer bevorzugten Ausführungsform einen Sensor, mit welchem ein Rollwinkel gemessen wird, und/oder ein Mittel, mit welchem aus mindestens einem Sensorsignal ein Rollwinkel bestimmt wird.

Alternativ oder zusätzlich ist es bevorzugt, zur Erkennung einer Geradeausfahrt oder annährenden Geradeausfahrt den Wert und/oder den zeitlichen Verlauf einer Querbeschleunigung des Fahrzeugs zu betrachten. Ist die Querbeschleunigung, besonders bevorzugt für eine vorgegebene Zeitdauer, kleiner als ein vorgegebener Schwellenwert, so wird eine Geradeausfahrt oder annährende Geradeausfahrt erkannt.

Die Erfindung betrifft auch die Verwendung eines erfindungsgemäßen Verfahrens in einer Bremsanlage für Krafträder.

Die Erfindung beschäftigt sich mit der Stabilisierung von (spontan) auftretenden instabilen Fahrzuständen in bestimmten Fahrsituationen, nicht mit der Vermeidung von instabilen Fahrsituationen, wie z.B. der Vermeidung einer Überbremsung in einer Kurve. Bei der Vermeidung von instabilen Fahrsituationen steht die Strategie der Bremsregelung vorab fest, es muss nur beobachtet werden, dass sich die Fahrsituation in Richtung der instabilen Fahrsituation entwickelt und es kann dann präventiv die Bremsregelung durchgeführt werden. Bei der Erfindung ist eine präventive Regelung nicht möglich, da es in der vorgegebenen Fahrsituation zu instabilen Fahrzuständen kommen kann oder auch nicht. Erst nach Erkennung eines instabilen Fahrzustandes wird eine Bremsregelung zur (teilweisen) Beseitigung des instabilen Fahrzustandes durchgeführt.

Außerdem ist die Regelstrategie der Erfindung nicht von der Stabilität des Drehzustand des/der Rades/Räder (Schlupfzustand) abhängig, wohingegen bei der Vermeidung von instabilen Fahrsituationen (z.B. der Vermeidung einer Überbremsung in einer Kurve) instabiles Raddrehverhalten vermieden werden soll. Gemäß eines Ausführungsbeispiels des erfindungsgemäßen Verfahrens wird ein "Schlingern" des Motorrades bei stabilem Raddrehverhalten des Vorderrades und hoher Bremsleistung frühzeitig erkannt und beseitigt.

Ein Vorteil der Erfindung ist die erhöhte Fahrstabilität, insbesondere bei Geradeausbremsungen, und die damit verbundene erhöhte Fahrsicherheit. Schwingungen (Pendeln) des Kraftrades um die Lenkachse oder ein seitliches Ausbrechen des Motorradhecks können frühzeitig erkannt und geeignete Maßnahmen zur Beendigung des instabilen Fahrzustandes durchgeführt werden.

Weitere bevorzugte Ausführungsformen der Erfindung ergeben sich aus den Unteransprüchen und der nachfolgenden Beschreibung anhand einer Figur.

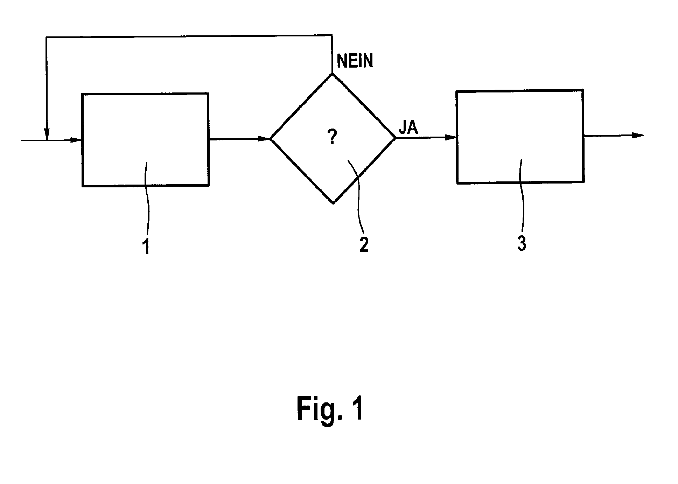

Es zeigt
- Fig. 1: eine schematische Darstellung eines beispielsgemäßen Verfahrens.

In Fig. 1 ist ein beispielsgemäßes Verfahren schematisch dargestellt. In Block 1 wird entschieden, ob es sich um eine vorgegebene Fahrsituation, beispielsgemäß um eine Bremsung bei Geradeausfahrt oder annährender Geradeausfahrt, handelt. Ist dies der Fall, so werden in Block 1 die Gierrate *ψ̇* und/oder der Schwimmwinkel β des Motorrades bestimmt und zur Erkennung eines instabilen Fahrzeugzustandes ausgewertet. Anhand von Kriterien wird in Block 2 entschieden, ob ein instabiler Fahrzeugzustand vorliegt oder nicht. Wird ein instabiler Fahrzeugzustand erkannt (Zweig JA bei Block 2), so wird in Block 3 das Bremsmoment an dem Vorderrad gerade so reduziert, dass die Fahrstabilität gewährleistet wird. Das Verfahren soll somit zur Erhaltung der Fahrstabilität, z.B. bei Geradeausbremsung, dienen.

Beispielsgemäß werden unter Geradesausfahrt (Block 1) solche Fahrsituationen verstanden, in denen der Rollwinkel λ des Motorrades klein ist, d.h. kleiner als ein vorgegebener Schwellenwert ist (z.B. λ<10°). Der Rollwinkel λ kann hierbei von einer geeigneten Sensorik (Rollwinkelsensor) und/oder einer Auswertesoftware bestimmt werden. Ein Verfahren zur Rollwinkelbestimmung ist z.B. in der DE 10 2006 061 483 A1 beschrieben. Dabei wird der Rollwinkel durch Integration einer Rollrate (mit Drehratensensor gemessen) oder aus einer Quer- und einer Vertikalbeschleunigung oder aus einer Gierrate und einer Vertikalbeschleunigung bestimmt. Eine Kombination von zwei oder drei dieser Verfahren ist auch möglich.

Eine Fahrzeugbremsung wird beispielsgemäß von dem elektronischen Bremssystem des Kraftrades erkannt (Block 1). Hierzu werden die Fahrzeugverzögerung und/oder Radverzögerungen und/oder Bremsdrücke ausgewertet, welche dem Bremssystem durch Messung und/oder Berechnung auf Basis von Modellen zur Verfügung stehen.

Zur Erkennung von instabilen Fahrzuständen wird die Gierrate *ψ̇* und/oder der Schwimmwinkel β des Motorrades herangezogen (Block 1). Die Gierrate *ψ̇* kann z.B. durch einen Drehratensensor gemessen werden. Solche Drehratensensoren an sich werden im Rahmen von Fahrdynamikregelsystemen in Pkw bereits serienmäßig eingesetzt. Der Schwimmwinkel β kann z.B. durch Integration der Gierrate *ψ̇* bestimmt werden. Ebenso sind im Stand der Technik andere Verfahren zur Bestimmung eines Schwimmwinkels β bekannt, oder der Schwimmwinkel β wird mit Hilfe eines Sensors gemessen.

Zur Erkennung von instabilem Gieren (Block 2) wird beispielweise beobachtet, ob eine hinreichend große Schwingung des Motorrades um seine Lenkachse auftritt. Eine solche Schwingung kann anhand des Signals der Gierrate *ψ̇* und/oder des Signals des Schwimmwinkels β erkannt werden. Die Schwingung ist z.B. durch Nulldurchgänge im Signal der Gierrate *ψ̇* gekennzeichnet.

Weiterhin kann auch das Vorliegen eines hinreichend großen Schwimmwinkels β (größer als ein vorgegebener Schwellenwert) das System veranlassen, zur Erhaltung der Fahrstabilität das Bremsmoment am Vorderrad zu reduzieren. Hierbei ist kein Nulldurchgang des Gierratensignals *ψ̇* notwendig, d.h. Bremseingriffe können auch Aufgrund einer langsamen, nicht schwingenden Schwimmwinkeländerung erfolgen.

Gemäß eines anderen Ausführungsbeispiels wird zusätzlich zur Reduktion der Vorderradbremsleistung (Block 3) eine gezielte Erhöhung der Hinterradbremsleistung durchgeführt.

Dies entspricht einer Änderung der Bremskraftverteilung zwischen Vorder- und Hinterrad.

Die Art und Größe der Bremsmomentreduktion am Vorderrad (Block 3) wird gemäß eines weiteren Ausführungsbeispiels von der Dynamik der Gierschwingung bzw. der Größe des Schwimmwinkels β abhängig gemacht. Dies bedeutet, dass bei Bewegungen großer Frequenz und/oder großer Amplitude der Bremsdruckabbau relativ groß gewählt wird, bei Bewegungen kleiner Frequenz und/oder kleiner Amplitude wird der Bremsdruckabbau klein gewählt.

Zusätzlich oder alternativ wird über die Dynamik der sich nach dem Bremsdruckabbau einstellenden Stabilisierung der folgende Bremsdruckaufbau geeignet dimensioniert. Hierdurch soll vermieden werden, dass sich erneut ein instabiler Fahrzustand ergibt.

Instabile Fahrzustände können aus verschiedenen Gründen entstehen. Im Folgenden sind einige Beispiele genannt:
Wird ein Verfahren zur Hinterradabhebeerkennung bzw. Überschlagsverhinderung, wie es z.B. aus der DE 10 2005 054 557 A1 bekannt ist, auf maximale Bremsleistung ausgelegt, so ist das Hinterrad gerade soweit entlastet, dass es noch nicht aufsteigt. Jedoch ist es nun auch nicht mehr in der Lage Seitenführungskräfte zu übertragen. Unter optimalen Bedingungen kann so tatsächlich die maximale Bremskraft nur über die Vorderradbremse übertragen werden. Allerdings ist das Motorrad nun relativ empfindlich gegenüber Störeinflüssen. So kann/können z.B. Seitenwind oder Fahrbahnunebenheiten das Motorradheck zum seitlichen Ausbrechen anregen oder zu einem Pendeln des Fahrzeuges führen. Eine Erhöhung der Fahrstabilität durch entsprechende Auslegung des elektronischen Bremssystems (EBS), z.B. durch andere Schwellenwerte bei der Hinterradabhebeerkennung, würde zu Lasten der maximalen Bremsleistung bei optimalen Bedingungen (ebene Fahrbahn, kein Seitenwind etc.) gehen, und ist daher nicht empfehlenswert.

Auch kann ein, wenn auch nur kurzzeitig, überbremstes Hinterrad zum Gieren des Motorrades führen.

Die Maßnahme zur Stabilisierung wird z.B. in Fahrsituationen angewendet, in welchen das Motorrad, z.B. aufgrund von wenig Bodenkontakt des Hinterrades beim Bremsen, zu gieren und/oder zu pendeln beginnt.

## Patentansprüche

1. Verfahren zur Stabilisierung eines instabilen Fahrzustandes bei einem einspurigen Kraftfahrzeug, insbesondere einem Motorrad, wobei
- eine vorgegebene Fahrsituation einer Bremsung bei einer Geradeausfahrt oder annähernden Geradeausfahrt erkannt wird (1), und
- zumindest eine Gierrate (*ψ̇*) und/oder ein Schwimmwinkel (β) des Fahrzeuges bestimmt wird (1),
**dadurch gekennzeichnet, dass**
- zur Erkennung eines instabilen Fahrzustandes eines Gierens oder Pendelns oder Schwingens um eine Vertikalachse oder eines seitlichen Ausbrechens des Hecks des Fahrzeugs die bestimmte Gierrate (*ψ̇*) und/oder der bestimmte Schwimmwinkel (β) ausgewertet wird/werden (2), und
- bei Erkennen eines Auftretens des instabilen Fahrzustandes während der vorgegebenen Fahrsituation ein Bremsmoment an mindestens einem Rad, insbesondere dem Vorderrad, reduziert wird (3).

2. Verfahren nach Anspruch 1, **dadurch gekennzeichnet, dass** bei Erkennen eines Auftretens eines instabilen Fahrzustandes die Bremskraftverteilung zwischen Vorder- und Hinterrad verändert wird.

3. Verfahren nach Anspruch 1 oder 2, **dadurch gekennzeichnet, dass** bei Erkennen eines Auftretens eines instabilen Fahrzustandes zusätzlich zu einer Reduktion des Bremsmoments an dem Vorderrad das Bremsmoment an dem Hinterrad erhöht wird.

4. Verfahren nach mindestens einem der vorhergehenden Ansprüche, **dadurch gekennzeichnet, dass** ein instabiler Fahrzustand erkannt wird, wenn das Signal der Gierrate (*ψ̇*) und/oder das Signal des Schwimmwinkels (β) für eine vorgegebene Zeitdauer einen periodischen oder annährend periodischen zeitlichen Verlauf zeigt.

5. Verfahren nach mindestens einem der vorhergehenden Ansprüche, **dadurch gekennzeichnet, dass** ein instabiler Fahrzustand erkannt wird, wenn das Signal der Gierrate (*ψ̇*) und/oder das Signal des Schwimmwinkels (β) eine vorgegebene Anzahl von Nulldurchgängen oder Durchgängen durch den Mittelwert durchläuft/durchlaufen.

6. Verfahren nach mindestens einem der vorhergehenden Ansprüche, **dadurch gekennzeichnet, dass** ein instabiler Fahrzustand erkannt wird, wenn der Wert des Schwimmwinkels (β), insbesondere bei konstantem oder annähernd konstantem Wert der Gierrate (*ψ̇*), einen vorgegebenen Schwellenwert übersteigt.

7. Verfahren nach mindestens einem der vorhergehenden Ansprüche, **dadurch gekennzeichnet, dass** ein instabiler Fahrzustand erkannt wird, wenn die zeitliche Änderung der Gierrate (*ψ̈*) einen vorgegebenen Schwellenwert übersteigt.

8. Verfahren nach mindestens einem der vorhergehenden Ansprüche, **dadurch gekennzeichnet, dass** das Maß und/oder der zeitliche Verlauf der Bremsmomentreduktion an dem Rad in Abhängigkeit von der Gierrate (*ψ̇*) und/oder dem Schwimmwinkel (β) durchgeführt wird.

9. Verfahren nach Anspruch 8, **dadurch gekennzeichnet, dass** das Bremsmoment an dem Rad in Abhängigkeit von
- einer Frequenz des Signals der Gierrate (*ψ̇*) und/oder des Schwimmwinkels (β), und/oder
- einer Amplitude des Signals der Gierrate (*ψ̇*) und/oder des Schwimmwinkels (β), und/oder
- dem Maß der zeitlichen Änderung der Gierrate und/oder des Schwimmwinkels, und/oder
- dem Wert der Gierrate (*ψ̇*) und/oder des Schwimmwinkels (β)
reduziert wird.

10. Verfahren nach mindestens einem der vorhergehenden Ansprüche, **dadurch gekennzeichnet, dass** die Auswirkung der Bremsmomentreduktion auf die Gierrate (*ψ̇*) und/oder den Schwimmwinkel (β) ausgewertet wird und zur Festlegung und/oder Dimensionierung einer nachfolgenden Bremsmomenterhöhung an dem Rad herangezogen wird.

11. Verfahren nach mindestens einem der vorhergehenden Ansprüche, **dadurch gekennzeichnet, dass** die Bremsung durch Betrachtung
- des Wertes und/oder des zeitlichen Verlaufes einer Fahrzeugverzögerung, und/oder
- des Wertes und/oder des zeitlichen Verlaufes einer Radverzögerung, und/oder
- des Wertes und/oder des zeitlichen Verlaufes mindestens eines Bremsdruckes
erkannt wird.

12. Verfahren nach mindestens einem der vorhergehenden Ansprüche, **dadurch gekennzeichnet, dass** die Geradeausfahrt oder annähernde Geradeausfahrt durch Betrachtung des Wertes und/oder des zeitlichen Verlaufes eines Rollwinkels (λ) und/oder einer Querbeschleunigung des Fahrzeugs erkannt wird.

13. Verfahren nach Anspruch 12, **dadurch gekennzeichnet, dass** die Geradeausfahrt oder annähernde Geradeausfahrt erkannt wird, wenn der Rollwinkel (λ), insbesondere für eine vorgegebene Zeitdauer, kleiner als ein vorgegebener Schwellenwert ist.

14. Vorrichtung zur Stabilisierung eines instabilen Fahrzustandes bei einem einspurigen Kraftfahrzeug, insbesondere einem Motorrad, mit einer Bremsanlage, welche ein Steuergerät zur Regelung mindestens eines Bremsdrucks einer Radbremse umfasst, wobei diese
- ein Mittel derart ausgebildet, dass eine vorgegebene Fahrsituation einer Bremsung bei einer Geradeausfahrt oder annähernden Geradeausfahrt erkannt wird, und
- mindestens einen Sensor, mit welchem zumindest eine Gierrate (*ψ̇*) und/oder ein Schwimmwinkel (β) gemessen wird, und/oder mindestens ein Mittel, mit welchem aus mindestens einem Sensorsignal zumindest eine Gierrate (*ψ̇*) und/oder ein Schwimmwinkel (β) bestimmt wird,
umfasst, **dadurch gekennzeichnet, dass** diese
- eine Auswerteeinheit, in welcher die Gierrate (*ψ̇*) und/oder der Schwimmwinkel (β) zur Erkennung eines instabilen Fahrzustandes eines Gierens oder Pendelns oder Schwingens um eine Vertikalachse oder eines seitlichen Ausbrechens des Hecks des Kraftrades ausgewertet wird, und
- eine Steuereinheit, in welcher bei Erkennen eines Auftretens des instabilen Fahrzustandes während der vorgegebenen Fahrsituation ein Steuersignal erzeugt wird, welches zu einer Reduktion eines Bremsmoments an mindestens einem Rad, insbesondere dem Vorderrad, führt,
umfasst.

15. Vorrichtung nach Anspruch 14, **dadurch gekennzeichnet, dass** diese mindestens einen Sensor, mit welchem zumindest ein Rollwinkel (λ) gemessen wird, und/oder mindestens ein Mittel, mit welchem aus mindestens einem Sensorsignal zumindest ein Rollwinkel (λ) bestimmt wird, umfasst, und der Rollwinkel (λ) in dem Mittel zur Erkennung einer vorgegebenen Fahrsituation, insbesondere einer Bremsung bei einer Geradeausfahrt oder annähernden Geradeausfahrt zur Erkennung einer Geradeausfahrt oder annähernden Geradeausfahrt, herangezogen wird.

16. Verwendung des Verfahrens gemäß mindestens einem der Ansprüche 1 bis 13 in einer Bremsanlage für Krafträder.

## Claims

1. Method for stabilizing an unstable driving state in a single-track motor vehicle, in particular a motorcycle, wherein
- a predefined driving situation of a braking operation in the case of straight-ahead travel or approximately straight-ahead travel is detected (1), and
- at least one yaw rate (ψ̇) and/or one attitude angle (β) of the vehicle is determined (1), **characterized in that**
- in order to detect an unstable driving state of yawing or oscillation or swinging about a vertical axis or of lateral veering off of the rear part of the vehicle, the specific yaw rate (ψ̇) and/or the specific attitude angle (β) are/is evaluated (2), and
- when the occurrence of the unstable driving state during the predefined driving situation is detected, a braking torque at at least one wheel, in particular the front wheel, is reduced (3).

2. Method according to Claim 1, **characterized in that**, when the occurrence of an unstable driving state is detected, the distribution of the braking force between the front wheel and the rear wheel is changed.

3. Method according to Claim 1 or 2, **characterized in that**, when the occurrence of an unstable driving state is detected, the braking torque at the rear wheel is increased in addition to a reduction in the braking torque at the front wheel.

4. Method according to at least one of the preceding claims, **characterized in that** an unstable driving state is detected if the signal of the yaw rate (ψ̇) and/or the signal of the attitude angle (β) exhibits a periodic or approximately periodic time profile for a predefined time period.

5. Method according to at least one of the preceding claims, **characterized in that** an unstable driving state is detected if the signal of the yaw rate (ψ̇) and/or the signal of the attitude angle (β) pass/passes through a predefined number of zero crossings or crossings through the mean value.

6. Method according to at least one of the preceding claims, **characterized in that** an unstable driving state is detected if the value of the attitude angle (β) exceeds a predefined threshold value, in particular in the case of a constant or approximately constant value of the yaw rate (ψ̇).

7. Method according to at least one of the preceding claims, **characterized in that** an unstable driving state is detected if the change in the yaw rate (ψ̈) over time exceeds a predefined threshold value.

8. Method according to at least one of the preceding claims, **characterized in that** the amount and/or the time profile of the reduction in the braking torque at the wheel are/is implemented as a function of the yaw rate (ψ̇) and/or the attitude angle (β).

9. Method according to Claim 8, **characterized in that** the braking torque at the wheel is reduced as a function of
- a frequency of the signal of the yaw rate (ψ̇) and/or of the attitude angle (β), and/or
- an amplitude of the signal of the yaw rate (ψ̇) and/or of the attitude angle (β), and/or
- the amount of change in the yaw rate and/or the attitude angle over time, and/or
- the value of the yaw rate (ψ̇) and/or the attitude angle (β).

10. Method according to at least one of the preceding claims, **characterized in that** the effect of the reduction in the braking torque on the yaw rate (ψ̇) and/or the attitude angle (β) is evaluated and is used to define and/or dimension a subsequent increase in the braking torque at the wheel.

11. Method according to at least one of the preceding claims, **characterized in that** the braking operation is detected by considering
- the value and/or the time profile of deceleration of the vehicle, and/or
- the value and/or the time profile of deceleration of the wheel, and/or
- the value and/or the time profile of at least one brake pressure.

12. Method according to at least one of the preceding claims, **characterized in that** the straight-ahead travel or approximately straight-ahead travel is detected by considering the value and/or the time profile of a rolling angle (λ) and/or of a lateral acceleration of the vehicle.

13. Method according to Claim 12, **characterized in that** the straight-ahead travel or approximately straight-ahead travel is detected if the rolling angle (λ) is smaller than a predefined threshold value, in particular for a predefined time period.

14. Device for stabilizing an unstable driving state in a single-track motor vehicle, in particular a motorcycle, having a brake system which comprises a control unit for regulating at least one brake pressure of a wheel brake, wherein said device comprises
- a means configured such that a predefined driving situation of a braking operation in the case of straight-ahead travel or approximately straight-ahead travel is detected, and
- at least one sensor with which at least one yaw rate (ψ̇) and/or one attitude angle (β) is measured, and/or at least one means with which at least one yaw rate (ψ̇) and/or one attitude angle (β) is determined from at least one sensor signal, **characterized in that** said device comprises
- an evaluation unit in which the yaw rate (ψ̇) and/or the attitude angle (β) are/is evaluated in order to detect an unstable driving state of yawing or oscillation or swinging about a vertical axis or of lateral veering off of the rear part of the motorcycle, and
- a control unit in which, when the occurrence of the unstable driving state during the predefined driving situation is detected, a control signal is generated which brings about a reduction in a braking torque at at least one wheel, in particular the front wheel.

15. Device according to Claim 14, **characterized in that** said device comprises at least one sensor with which at least one rolling angle (λ) is measured, and/or at least one means with which at least one rolling angle (λ) is determined from at least one sensor signal, and the rolling angle (λ) is used in the means to detect a predefined driving situation, in particular a braking operation in the case of straight-ahead travel or approximately straight-ahead travel, for the purpose of detecting straight-ahead travel or approximately straight-ahead travel.

16. Use of the method according to at least one of Claims 1 to 13 in a brake system for motorcycles.

## Revendications

1. Procédé pour la stabilisation d'une phase de conduite instable pour un véhicule à moteur à deux roues, en particulier une motocyclette, pour lequel
- une situation de conduite préalablement spécifiée d'un freinage est identifiée pour une marche en ligne droite ou une marche à peu près en ligne droite (1), et
- au moins une vitesse de lacet (*ψ̇*) et/ou un angle de dérive (β) du véhicule est/sont défini(e)(s) (1),
**caractérisé en ce que**
- pour identifier une phase de conduite instable d'un lacet ou d'un balancement ou d'une oscillation autour d'un axe vertical ou d'un dérapage latéral de l'arrière du véhicule, la vitesse de lacet (*ψ̇*) définie et/ou l'angle de dérive (β) défini est/sont analysé(s) (2), et
- lors de l'identification d'une occurrence de la phase de conduite instable pendant la situation de conduite préalablement spécifiée, un couple de freinage est réduit (3) sur au moins une roue, en particulier sur la roue avant.

2. Procédé selon la revendication 1 ou 2 **caractérisé en ce que** lors de l'identification d'une occurrence d'une phase de conduite instable la répartition de la force de freinage est modifiée entre la roue avant et la roue arrière.

3. Procédé selon la revendication 1 ou 2 **caractérisé en ce que** lors de l'identification d'une occurrence d'une phase de conduite instable, le couple de freinage est augmenté sur la roue arrière en plus d'une réduction du couple de freinage sur la roue avant.

4. Procédé selon au moins l'une quelconque des revendications précédentes **caractérisé en ce qu'**une phase de conduite instable est identifiée, si le signal de la vitesse de lacet (*ψ̇*) et/ou le signal de l'angle de dérive (β) pour une durée préalablement spécifiée indique(nt) un profil dans le temps périodique ou à peu près périodique.

5. Procédé selon au moins l'une quelconque des revendications précédentes **caractérisé en ce qu'**une phase de conduite instable est identifiée, si le signal de la vitesse de lacet (*ψ̇*) et/ou le signal de l'angle de dérive (β) passe(nt) par un nombre préalablement spécifié de passages par zéro ou de passages par la valeur moyenne.

6. Procédé selon au moins l'une quelconque des revendications précédentes **caractérisé en ce qu'**une phase de conduite instable est identifiée, si la valeur de l'angle de dérive (β), en particulier à une valeur constante ou à peu près constante de la vitesse de lacet (*ψ̇*), dépasse une valeur seuil préalablement spécifiée.

7. Procédé selon au moins l'une quelconque des revendications précédentes **caractérisé en ce qu'**une phase de conduite instable est identifiée, si la modification dans le temps de la vitesse de lacet (*ψ̈*) dépasse une valeur seuil préalablement spécifiée.

8. Procédé selon au moins l'une quelconque des revendications précédentes **caractérisé en ce que** la mesure et/ou le profil dans le temps de la réduction du couple de freinage est/sont effectué(e)(s) sur la roue en fonction de la vitesse de lacet (*ψ̇*) et/ou de l'angle de dérive (β).

9. Procédé selon la revendication 8 **caractérisé en ce que** le couple de freinage est réduit sur la roue en fonction
- d'une fréquence du signal de la vitesse de lacet (*ψ̇*) et/ou de l'angle de dérive (β), et/ou
- d'une amplitude du signal de la vitesse de lacet (*ψ̇*) et/ou de l'angle de dérive (β), et/ou
- de la mesure de la modification dans le temps de la vitesse de lacet et/ou de l'angle de dérive, et/ou
- de la valeur de la vitesse de lacet (*ψ̇*) et/ou de l'angle de dérive (β).

10. Procédé selon au moins l'une quelconque des revendications précédentes **caractérisé en ce que** l'effet de la réduction du couple de freinage sur la vitesse de lacet (*ψ̇*) et/ou l'angle de dérive (β) est analysé et est utilisé pour définir et/ou dimensionner une augmentation de couple de freinage successive sur la roue.

11. Procédé selon au moins l'une quelconque des revendications précédentes **caractérisé en ce que** le freinage est identifié en considération
- de la valeur et/ou du profil dans le temps d'une décélération du véhicule, et/ou
- de la valeur et/ou du profil dans le temps d'une décélération de roue, et/ou
- de la valeur et/ou du profil dans le temps d'au moins une pression de freinage.

12. Procédé selon au moins l'une quelconque des revendications précédentes **caractérisé en ce que** la marche en ligne droite ou la marche à peu près en ligne droite est identifiée en considérant la valeur et/ou le profil dans le temps d'un angle de roulis (λ) et/ou d'une accélération transversale du véhicule.

13. Procédé selon la revendication 12 **caractérisé en ce que** la marche en ligne droite ou la marche à peu près en ligne droite est identifiée, si l'angle de roulis (λ), en particulier pour une durée préalablement spécifiée, est inférieur à une valeur seuil préalablement spécifiée.

14. Dispositif pour la stabilisation d'une phase de conduite instable pour un véhicule à moteur à deux roues, en particulier une motocyclette, avec un système de freinage qui comprend un appareil de commande pour réguler au moins une pression de freinage d'un frein de roue, celui-ci comprenant
- un moyen réalisé de telle sorte qu'une situation de conduite préalablement spécifiée d'un freinage soit identifiée pour une marche en ligne droite ou une marche à peu près en ligne droite, et
- au moins un capteur avec lequel au moins une vitesse de lacet (*ψ̇*) et/ou un angle de dérive (β) est/sont mesuré(e)(s) et/ou au moins un moyen avec lequel au moins une vitesse de lacet (*ψ̇*) et/ou un angle de dérive (β) est/sont défini (e) (s) à partir d'au moins un signal de capteur,
**caractérisé en ce que** celui-ci comprend
- une unité d'évaluation dans laquelle la vitesse de lacet (*ψ̇*) et/ou l'angle de dérive (β) est/sont analysé(e)(s) pour identifier une phase de conduite instable d'un lacet ou d'un balancement ou d'une oscillation autour d'un axe vertical ou d'un dérapage latéral de l'arrière de la roue motrice, et
- une unité de commande dans laquelle lors de l'identification d'une occurrence de la phase de conduite instable pendant la situation de conduite préalablement spécifiée, un signal de commande est produit, qui conduit à une réduction d'un couple de freinage sur au moins une roue, en particulier la roue avant.

15. Dispositif selon la revendication 14 **caractérisé en ce que** celui-ci comprend au moins un capteur avec lequel on mesure au moins un angle de roulis (λ), et/ou au moins un moyen avec lequel est défini au moins un angle de roulis (λ) à partir d'au moins un signal de capteur et l'angle de roulis (λ) est utilisé dans le moyen pour identifier une situation de conduite préalablement spécifiée, en particulier un freinage pour une marche en ligne droite ou une marche à peu près en ligne droite pour identifier une marche en ligne droite ou une marche à peu près en ligne droite.

16. Utilisation du procédé selon au moins l'une quelconque des revendications 1 à 13 dans un système de freinage pour roues motrices.
